# EUROPÄISCHE PATENTSCHRIFT

(11) **EP 2 762 915 B1**
(45) Veröffentlichungstag und Bekanntmachung des Hinweises auf die Patenterteilung: **03.01.2018**
(21) Anmeldenummer: 13000460.9
(22) Anmeldetag: 31.01.2013
(51) Int. Cl.: G01S 13/00, G01S 13/87

(54) **Verfahren zum Betreiben eines Passivradars**
Method for operating a passive radar
Procédé de fonctionnement d'un radar passif

(43) Veröffentlichungstag der Anmeldung: 06.08.2014
(60) Teilanmeldung: 15000289.7
(73) Patentinhaber: HENSOLDT Sensors GmbH, 82024 Taufkirchen (DE)
(72) Erfinder: Edrich, Michael, 89197 Weidenstetten (DE); Schröder, Alexander, 89231 Neu-Ulm (DE)
(74) Vertreter: LifeTech IP Spies & Behrndt Patentanwälte PartG mbB

(56) Entgegenhaltungen:
- EP-A2- 1 972 962
- INGGS M R ET AL: "Commensal radar using separated reference and surveillance channel configuration", ELECTRONICS LETTERS, IEE STEVENAGE, GB, Bd. 48, Nr. 18, 30. August 2012 (2012-08-30), Seiten 1158-1160, XP006041177, ISSN: 0013-5194, DOI: 10.1049/EL.2012.1124
- RADMARD M ET AL: "Advantages of the DVB-T signal for passive radar applications", RADAR SYMPOSIUM (IRS), 2010 11TH INTERNATIONAL, IEEE, PISCATAWAY, NJ, USA, 16. Juni 2010 (2010-06-16), Seiten 1-5, XP031731809, ISBN: 978-1-4244-5613-0
- MOJTABA RADMARD ET AL: "Diversity gain in MIMO Passive Coherent Location", RADAR SYMPOSIUM (IRS), 2011 PROCEEDINGS INTERNATIONAL, IEEE, 7. September 2011 (2011-09-07), Seiten 841-848, XP031975386, ISBN: 978-1-4577-0138-2

## Beschreibung

Die Erfindung betrifft ein Verfahren zum Betreiben eines Passivradars nach dem Oberbegriff des Patentanspruch 1.

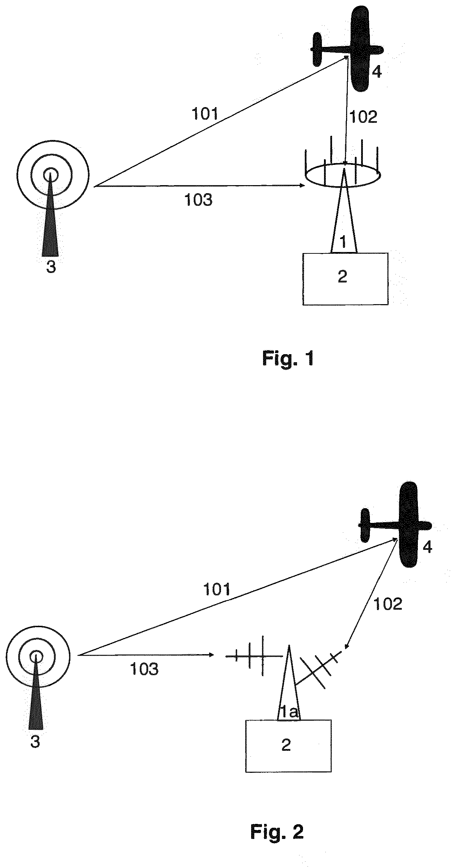

Ein Passivradar zeichnet sich gemäß dem allgemeinen Stand der Technik durch folgende Eigenschaften aus, siehe Fig.1:
- Es besteht im Wesentlichen aus einer Empfangseinheit 1 zur Signalaufnahme und einer Verarbeitungseinheit 2 zur Signalverarbeitung.
- Es verfügt über keine eigene Sendeeinheit.
- Der zur Zielbeleuchtung benötigte Sender 3 (im Folgenden auch "Beleuchter" genannt) ist nicht-kooperativ (z.B. FM-, DAB-, DVB-T-, GSM-Sender, etc.).
- Die Konstellation ist bistatisch, d.h. Sender 3 und Empfangseinheit 1 sind disloziert, d.h. räumlich getrennt.

Das prinzipielle Vorgehen zur Zielortung mittels Passivradar wird anhand Fig. 1 erläutert:
- Der nicht-kooperative Sender 3, welcher zur Zielbeleuchtung verwendet wird, strahlt ein Signal 101,103 ab.
- Dieses Signal gelangt durch Wellenausbreitung
   - auf direktem Weg unmittelbar vom Sender 3 zur Empfangseinheit 1 des Passivradars - dies wird in der Fachliteratur wie auch im Folgenden als "Direktsignal" 103 bezeichnet. Als Direktsignal im Sinne der vorliegenden Erfindungsoffenbarung wird auch ein von der Empfangseinheit 1 auf direktem Weg von einem anderen Sender empfangenes Signal bezeichnet, soweit dieser andere Sender denselben Signalinhalt auf derselben Frequenz abstrahlt.
   - mittels Reflexion an einem Ziel 4, z.B. einem Luftfahrzeug, über einen Umweg 101 zur Empfangseinheit 1 des Passivradars - dies wird in der Fachliteratur wie auch im Folgenden als "Zielsignal" 102 bezeichnet.
- Die Zieldetektion basiert auf einem Korrelationsprozess des Zielsignals 102 mit einem Referenzsignal in der Verarbeitungseinheit 2, wobei
   - das Referenzsignal aus dem Direktsignal 103 gewonnen wird.
   - das Direktsignal 103 im Allgemeinen um Größenordnungen stärker als das Zielsignal 102 an der Empfangseinheit 1 ankommt.
   - das Zielsignal 102 gegenüber dem Direktsignal 103 Laufzeit- und (bei Zielbewegung) Dopplerverschoben an der Empfangseinheit 1 ankommt und somit als Ergebnis des Korrelationsprozesses eine Range-Doppler-Matrix entsteht, in welcher an entsprechender Stelle in Range und Doppler sich das Ziel 4 befindet.
   - zwingend Referenzsignal und Zielsignal 102 mit ausreichendem Signal-zu-Störabstand an der Verarbeitungseinheit 2 vorliegen müssen.

Verschiedene Varianten für den Aufbau und Betrieb bekannter Passivradare sind in den Fig. 1 bis 3 dargestellt. Für alle drei Varianten gilt:
- Referenzsignal, gewonnen aus dem Direktsignal 103, und Zielsignal 102 stammen vom selben Sender 3.
- Direktsignal 103 und Zielsignal 102 werden mit derselben Empfangseinheit 1 des Passivradars aufgenommen.
- Das Direktsignal 103 gelangt auf direktem Weg mittels Wellenausbreitung vom Sender 3 zur Empfangseinheit 1.

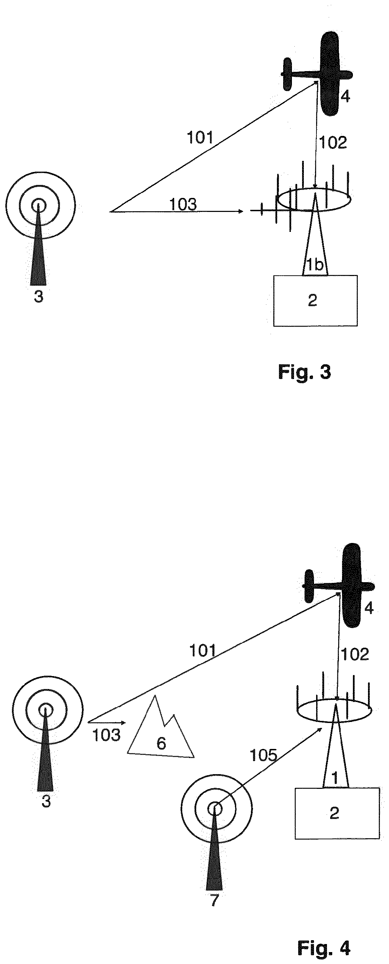

Die Empfangseinheit kann in verschiedenen Ausführungen gestaltet sein, u.a.:
- Empfangseinheit 1 in Fig. 1: Kreisarray zur Direktsignalaufnahme mittels Beamforming und zur omnidirektionalen Zielraumüberwachung, [1]
- Empfangseinheit 1a in Fig. 2: Richtantenne zur Direktsignalaufnahme, weitere Richtantenne zur sektoriellen Zielraumüberwachung, [2].
- Empfangseinheit 1b in Fig. 3: Richtantenne zur Direktsignalaufnahme, Kreisarray zur omnidirektionalen Zielraumüberwachung.

Die Antennen der Empfangseinheit befinden sich dabei innerhalb eines maximalen Abstands von wenigen Metern.

Für den Korrelationsprozess ist das Vorliegen eines Referenzsignals in der Verarbeitungseinheit des Passivradars unerlässlich. Im Hinblick auf einen optimalen Korrelationsprozess ergeben sich bei den bekannten Passivradaren die folgenden Limitierungen:
- Gelangt das Direktsignal nach dem Stand der Technik auf unmittelbarem Weg mittels Wellenausbreitung direkt vom nicht-kooperativen Sender zur Empfangseinheit des Passivradars, so ist dieses im Allgemeinen um Größenordnungen stärker als das Zielsignal an der Empfangseinheit. Dieses limitiert einerseits die Dynamik der Empfangseinheit und maskiert andererseits auf Grund der Eigenschaft des Korrelationsverhaltens der verwendeten Signale (Zielsignal und Direktsignal) die Radarziele in der Range-Doppler-Matrix.
- Für einen optimalen Korrelationsprozess ist das Zielsignal vollständig von allen Anteilen des Direktsignals zu bereinigen. Dieses wird Stand der Technik im Wesentlichen in der Verarbeitungseinheit algorithmisch gelöst, [3] und sorgt lediglich für eine unvollständige Unterdrückung des Direktsignals im Zielsignal, was zu einer verringerten Detektionsleistung führt.
- Für einen optimalen Korrelationsprozess ist weiterhin das Referenzsignal vollständig von allen Interferenzanteilen zu bereinigen. Dieses wird gemäß dem Stand der Technik im Wesentlichen in der Verarbeitungseinheit algorithmisch durchgeführt und sorgt allerdings nur für eine unvollständige Interferenzbereinigung und somit zu einer verringerten Detektionsleistung.
Die EP 1 972 962 A2 beschreibt ein Passivradarverfahren, bei dem am Ziel reflektierte Signale von mehreren Empfängern empfangen werden, wobei an diesen Empfängern auf direktem Weg kein Sendesignal des nicht-kooperativen Senders empfangen wird. Die Position des Ziels wird nicht mittels eines Referenzsignals, welches das Signal eines nicht-kooperativen Sendes auf direktem Weg empfängt, ermittelt, sondern aus den Zeitdifferenzen, mit denen die einzelnen Empfänger die am Ziel reflektierten Signale empfangen.
Ein Passivradarverfahren, das die eingangs genannten Limitierungen der bekannten Verfahren überwindet, ist in INGGS M R ET AL: "Commensal radar using separated reference and surveillance channel configuration", ELECTRONICS LETTERS, IEE STEVENAGE, GB, Bd. 48, Nr. 18, 30. August 2012 (2012-08-30), Seiten 1158-1160, XP006041177, ISSN: 0013-5194, DOI: 10.1049/EL.2012.1124 beschrieben. Dieses Dokument bildet den Oberbegriff des Patentanspruchs. Darin wird die Empfangseinheit des Passivradars derart positioniert, dass das vom nicht-kooperativen Sender auf direktem Weg empfangene Signal möglichst gering ist. Die Referenzsignalgewinnung erfolgt, indem das Signal des nicht-kooperativen Senders auf direktem Weg von einem zweiten Empfänger empfangen wird, der so platziert ist, dass ein Empfang auf direktem Weg möglich ist.
Der Erfindung liegt die Aufgabe zugrunde, ein weiteres Verfahren zum Betrieb eines Passivradars zu schaffen, welches die vorgenannten Limitierungen überwindet und insbesondere eine deutliche Steigerung der Empfindlichkeit und somit der Detektionsleistung des Passivradars erzielt.
Diese Aufgabe wird mit dem Verfahren nach dem Patentanspruch gelöst. Gemäß der vorliegenden Erfindung erfolgt die Bereitstellung des Referenzsignals in der Verarbeitungseinheit des Passivradars nicht durch Empfang des mittels Wellenausbreitung auf direktem Wege vom nicht-kooperativen Sender übertragenen Signals. Vielmehr wird die räumliche Konstellation von Sender und Passivradar gerade so gewählt, dass das Direktsignal am Ort der Empfangseinrichtung sehr gering (nämlich im Bereich der thermischen Rauschgrenze) oder überhaupt nicht mehr nachweisbar ist. Dies ist insbesondere dann der Fall, wenn sich der Sender räumlich deutlich von der Empfangseinheit entfernt befindet und/oder durch Gelände deutlich abgeschattet wird.

Durch die Unterdrückung des Direktsignals am Ort des Empfängers wird das wesentliche Hindernis für eine optimale Durchführung der Korrelation beseitigt. Das für die Korrelation nach wie vor benötigte Referenzsignal wird erfindungsgemäß auf einem anderen - mittelbaren - Übertragungsweg gewonnen:

Die Referenzsignalgewinnung erfolgt, in dem das Signal eines weiteren nicht-kooperativen Senders auf direktem Weg von der Empfangseinheit des Passivradars empfangen wird und der Verarbeitungseinheit des Passivradars zur Verfügung gestellt wird, wobei der weitere nicht-kooperativen Sender denselben Signalinhalt auf einer anderen Sendefrequenz überträgt wie der nicht-kooperative Sender.

Damit kann eine deutliche Steigerung der Empfindlichkeit und somit der Detektionsleistung erzielt werden.

Zur Erreichung eines möglichst starken Zielsignals sollte der Verbindungspfad zwischen Sender und Ziel, wie auch der Verbindungspfad zwischen Ziel und Empfängereinheit möglichst frei von Abschattungen sein, was für Flugziele ohne Weiteres realisierbar ist.

Durch die mittelbare Gewinnung des Referenzsignals ist es auch möglich, letzteres in hohem Maße interferenzfrei zu gewinnen.

Weitere Vorteile der Erfindung sind:
- Deutliche Erhöhung der Reichweite des Passivradars.
- Verbesserte Detektion von Luftzielen im höheren Luftraum, da diese aufgrund der Sendeantennen-Elevationscharakteristik nur durch weit entfernte Sender zuverlässig beleuchtet werden können.
- Größere Anzahl verwendbarer Sender, daraus ergibt sich eine bessere Konfigurationsmöglichkeit des Passivradars im Hinblick auf die konkreten Detektionsanforderungen.

Ein konkretes Ausführungsbeispiel der Erfindung wird anhand von Figuren näher erläutert. Es zeigen:
- Fig. 1 bis 3: mehrere bekannte Ausführungen für den Betrieb von Passivradaren wie in der Beschreibungseinleitung erläutert;
- Fig. 4: eine erfindungsgemäße Ausführungen für den Betrieb eines Passivradars.

In der in Fig. 4 dargestellten Ausführung erfolgt die Referenzsignalgewinnung über einen weiteren, an der Empfangseinheit 1 des Passivradars durch Wellenausbreitung auf direktem Weg empfangbaren Sender 7, welcher denselben Signalinhalt wie der Beleuchter 3 auf einer anderen Sendefrequenz überträgt. Die Übertragung 105 erfolgt mittels direkter Wellenausbreitung 105 zwischen Zweitsender 7 und Empfänger 1. Laufzeit- und Frequenzversätze werden algorithmisch in der Verarbeitungseinheit 2 des Passivradars kompensiert.

**Bezugsziffern:**

| **Nummer** | **Objekt** |
|---|---|
| 1 | Empfangseinheit des Passivradars |
| 2 | Verarbeitungseinheit des Passivradars |
| 3 | Sender (Beleuchter) |
| 4 | Radarziel, z.B. Flugziel |
| 6 | Gelände/Höhenzug |
| 7 | Sender mit demselben Signalinhalt, aber anderer Frequenz als Sender 3 |

| **Nummer** | **Signal / Signalpfad** |
|---|---|
| 101 | Signalpfad zwischen Sender und Radarziel |
| 102 | Zielsignal |
| 103 | Direktsignal |
| 104 | weiterer Kommunikationsweg, wie etwa Leitung, Richtfunk, Internet VPN |
| 105 | direkte Wellenausbreitung zwischen weiterem Sender 7 und Empfangseinheit 1 |

### Referenzen:

[1] A. Schröder, M. Edrich, Cassidian, Germany; "CASSIDIAN Multiband Mobile Passive Radar System"; IRS 2011 Leipzig
[2] Dale Gould, Robert Pollard, Carlos Sarno, Paul Tittensor; "DVB-T trials with the Multiband Passive Radar Demonstrator System"; IRS 2007 Cologne
[3] K.S.Kupta, Z.Czekala; "Masking Effeckts and its Removal in PCL-Radar"; IEE Proc Radar,Sonar & Navigation, Vo. 152, Num. 3, June 2005

## Patentansprüche

1. Verfahren zum Betreiben eines Passivradars, welches eine Empfangseinheit (1) zum Empfang eines an einem Radarziel (4) reflektierten Signals (102) und eine Verarbeitungseinheit (2) umfasst, wobei die Verarbeitungseinheit (2) zur Verarbeitung des reflektierten Signals (102) unter Einbeziehung eines Referenzsignals zur Zieldetektion dient, welches mit dem reflektierten Signal (102) korreliert ist, wobei
- die Empfangseinheit (1) des Passivradars in Bezug auf einen zur Zielbeleuchtung verwendeten ersten nicht-kooperativen Sender (3) derart räumlich positioniert ist, dass das von der Empfangseinheit (1) auf direktem Weg empfangene Signal (103) des ersten nicht-kooperativen Senders (3) nur sehr schwach ausgeprägt ist, nämlich im Bereich der thermischen Rauschgrenze liegt oder gar nicht vorhanden ist,
- das Referenzsignal durch alternative Übertragungswege (105) als durch Übertragung (103) auf direktem Weg vom ersten nicht-kooperativen Sender (3) zum Passivradar gewonnen wird, und der Verarbeitungseinheit (2) zur Verfügung gestellt wird,
**dadurch gekennzeichnet, dass** die Referenzsignalgewinnung erfolgt, in dem das Signal (105) eines weiteren nicht-kooperativen Senders (7) auf direktem Weg von der Empfangseinheit (1) des Passivradars empfangen wird und der Verarbeitungseinheit (2) des Passivradars zur Verfügung gestellt wird, wobei der weitere nicht-kooperativen Sender (7) denselben Signalinhalt auf einer anderen Sendefrequenz überträgt wie der erste nicht-kooperative Sender (3).

## Claims

1. Method for operating a passive radar that comprises a reception unit (1), for receiving a signal (102) reflected from a radar target (4), and a processing unit (2), wherein the processing unit (2) is used for processing the reflected signal (102) by involving a reference signal for target detection that is correlated with the reflected signal (102), wherein
- the reception unit (1) of the passive radar is physically positioned in relation to a first non-cooperative transmitter (3), used for target illumination, such that the signal (103) that the reception unit (1) receives on a direct path from the first non-cooperative transmitter (3) is only very weak in appearance, namely is situated in the region of the thermal noise limit or is not present at all,
- the reference signal is obtained through alternative transmission paths (105) rather than by transmission (103) on a direct path from the first non-cooperative transmitter (3) to the passive radar, and is made available to the processing unit (2),
**characterized in that** the reference signal is obtained by virtue of the signal (105) from a further non-cooperative transmitter (7) being received on a direct path by the reception unit (1) of the passive radar and being made available to the processing unit (2) of the passive radar, wherein the further non-cooperative transmitter (7) transmits the same signal content on a different transmission frequency than the first non-cooperative transmitter (3).

## Revendications

1. Procédé de mise en fonctionnement d'un radar passif comprenant une unité de réception (1) destinée à recevoir un signal (102) réfléchi sur un cible radar (4) et une unité de traitement (2), dans lequel l'unité de traitement (2) sert à la détection de cible pour le traitement du signal réfléchi (102) en tenant compte d'un signal de référence qui est corrélé avec le signal réfléchi (102), dans lequel
- l'unité de réception (1) du radar passif est positionnée spatialement par rapport à un premier émetteur non coopératif (3) utilisé pour éclairer la cible de manière à ce que le signal (103) du premier émetteur non coopératif (3) reçu par l'unité de réception (1) sur le trajet direct ne soit que très faible, c'est-à-dire qu'il se situe dans la région de la limite du bruit thermique ou qu'il ne soit pratiquement pas présent,
- le signal de référence est obtenu par l'intermédiaire d'autres trajets de transmission (105) que la transmission (103) sur le trajet direct du premier émetteur non coopératif (3) vers le radar passif, et est délivré à l'unité de traitement (2),
**caractérisé en ce que** l'obtention du signal de référence s'effectue en faisant en sorte que le signal (105) d'un autre émetteur non coopératif (7) soit reçu sur le trajet direct par l'unité de réception (1) du radar passif et soit délivré à l'unité de traitement (2) du radar passif, dans lequel l'autre émetteur non coopératif (7) transmet le même contenu de signal sur une autre fréquence d'émission que le premier émetteur non coopératif (3).
